# EUROPEAN PATENT APPLICATION

(11) **EP 3 486 522 A1**
(43) Date of publication of application: **22.05.2019**
(21) Application number: 18206518.5
(22) Date of filing: 15.11.2018
(51) Int. Cl.: F16G 1/28, F16G 3/00, F16G 13/06, B62M 9/00

(54) **QUICK-LINKED BELT**

(30) Priority: 16.11.2017 TW 10639763
(71) Applicant: Giant Manufacturing Co., Ltd., Taichung City 437 (TW)
(72) Inventor: CHEN, Chien-Hung, Miaoli County (TW); LIU, Shao-Chieh, Taichung City (TW)
(74) Representative: Jakelski & Althoff Patentanwälte PartG mbB

(57) **Abstract**

A quick-linked belt (100a; 100b; 100c; 100d), which is assembled with a belt sprocket (600) of a belt-driven vehicle, includes a belt element (200), at least two reinforcing elements (300), at least two fixing elements (500) and at least two connecting elements (400). The belt element includes a plurality of belt teeth (220) and two binding portions (210). The binding portions are disposed on two ends of the belt element, respectively, and each of the binding portions includes at least one opening hole (230). Each of the at least two reinforcing elements is disposed in the at least one opening hole of each of the binding portions and includes a through hole (310). Each of the at least two fixing elements is disposed in the through hole of each of the at least two reinforcing elements. Each of the at least two connecting elements includes at least two passing holes (410) for passing through the at least two fixing elements.

## Description

### BACKGROUND

### Technical Field

The present disclosure relates to a belt of a belt-driven vehicle. More particularly, the present disclosure relates to a belt of a belt-driven vehicle which can be linked quickly.

### Description of Related Art

Vehicles using a metal chain and sprockets for power transmission are common in daily life, and the application thereof is also broad. However, because the chain made of a metal material is heavy, it is easy to fall off during the driving of the vehicle. Furthermore, during the power transmission process, it is easy to generate noise due to the friction between the metal chain and the sprockets made of a metal material, and a lubricant should be applied into the gap between the metal chain and the sprockets so as to reduce the friction thereof and then operate smoothly. Moreover, the manufacturing process of the metal chain is more complicated, and the manufacturing cost thereof is also higher. Therefore, the vehicles using the metal chain for power transmission still have some unavoidable defects.

In order to solve the aforementioned problems, belt-driven vehicles which use a belt instead of a metal chain for power transmission is provided by people in the related art. The belt-driven vehicles driven by the belt-driven system have the advantages of high strength and low noise. The material quality of the belt is lighter than the conventional chain so that the lubricant is not required between the metal chain and the sprockets, and the durability and the service life thereof are also better than the metal chain. However, during the manufacturing process thereof, because a shape of the belt is a closed-loop shape, the chain stays should be designed in a dodging strategy in accordance with the installing path of the belt so as to facilitate the installation of the belt. Therefore, the belt must be applied on a specialized bicycle frame so as to use effectively. Furthermore, the assembly process of the belt-driven system is complicated. When the belt is worn or damaged, the rear wheel of the bicycle must be further removed so as to assemble a new belt on the belt sprocket. Thus, the convenience and practicability of the belt-driven system will be greatly reduced, so that the penetrating rate of the belt-driven vehicles is still lower than that of the conventional chain-driven vehicles.

In order to solve the aforementioned problems, a related prior art provides a belt of a belt sprocket bicycle. By the arrangement that the first unit and the second unit are disposed on the two ends of the belt so as to nest to each other, the two ends of the belt will be connected to each other and then formed into a ring shape. Therefore, the problems for exchanging the belt can be solved. However, each of the first unit and the second unit is a specialized connecting structure. In the manufacturing process of the first unit and the second unit, the two ends of the belt must be cut, partially removed or processed by other modification processes. Thus, the manufacturing process of the belt is complicated, and the manufacturing cost thereof is also higher. Furthermore, the strength of the aforementioned belt will be reduced after the modification processes, and the overall strength of the belt after the two ends being connected is also affected. Moreover, in the process of the power transmission, the connecting portion of the belt is easy to fall off or crack. Even worse, the belt may break at the connecting portion. Therefore, the convenience and durability of the aforementioned belt-driven vehicle are not as good as expected.

### SUMMARY

According to one aspect of the present disclosure, a quick-linked belt, which is assembled with a belt sprocket of a belt-driven vehicle, includes a belt element, at least two reinforcing elements, at least two fixing elements and at least two connecting elements. The belt element includes a plurality of belt teeth and two binding portions, wherein the belt teeth are integrally disposed on one side of the belt element, the two binding portions are disposed on two ends of the belt element, respectively, and each of the two binding portions includes at least one opening hole. Each of the at least two reinforcing elements is disposed in the at least one opening hole of each of the two binding portions, and each of the at least two reinforcing elements includes a through hole. Each of the at least two fixing elements is disposed in the through hole of each of the at least two reinforcing elements. Each of the at least two connecting elements includes at least two passing holes for passing through the at least two fixing elements, and the two binding portions are connected to each other by the at least two connecting elements so as to enclose the belt element into a ring shape.

According to the quick-linked belt of the foregoing aspect, wherein each of the two binding portions includes a first side portion and a second side portion, and when the two binding portions are connected to each other by the at least two connecting elements, the two binding portions are opposite to each other, the first side portion of one of the two binding portions is disposed parallel to the second side portion of the other of the two binding portions, and each of the at least two connecting elements abuts simultaneously the first side portion of one of the two binding portions and the second side portion of the other of the two binding portions.

According to the quick-linked belt of the foregoing aspect, wherein a length of each of the at least two connecting elements can be larger than or equal to a double of a length of each of the belt teeth.

According to the quick-linked belt of the foregoing aspect, wherein a material of the at least two reinforcing elements can be a metal material or other hard materials.

According to the quick-linked belt of the foregoing aspect, wherein a shape of the at least two reinforcing elements can be hollow cylindrical, hollow triangular columnar or hollow rectangular columnar.

According to the quick-linked belt of the foregoing aspect, wherein a material of the at least two connecting elements can be a metal material or other hard materials.

According to another aspect of the present disclosure, a quick-linked belt, which is assembled with a belt sprocket of a belt-driven vehicle, includes a belt element, at least two reinforcing elements, at least two fixing elements and at least two connecting elements. The belt element includes a plurality of belt teeth and two binding portions. The belt teeth are integrally disposed on one side of the belt element. The two binding portions are disposed on two ends of the belt element, respectively, wherein each of the two binding portions includes at least one opening hole, a first concave portion and a second concave portion, and when the two binding portions are disposed opposite to each other, the first concave portion of one of the two binding portions is corresponding to the second concave portion of the other of the two binding portions so as to form one recessed cavity, and the second concave portion of the one of the two binding portions is corresponding to the first concave portion of the other of the two binding portions so as to form the other recessed cavity. Each of the at least two reinforcing elements is disposed in the opening hole of each of the two binding portions, and each of the at least two reinforcing elements includes a through hole. Each of the at least two fixing elements is disposed in the through hole of each of the at least two reinforcing elements. The at least two connecting elements are respectively disposed in the two recessed cavities, wherein each of the at least two connecting elements includes at least two passing holes for passing through the at least two fixing elements, and the two binding portions are connected to each other by the at least two connecting elements so as to enclose the belt element into a ring shape.

According to the quick-linked belt of the foregoing aspect, wherein a length of each of the at least two connecting elements can be larger than or equal to a double of a length of each of the belt teeth.

According to the quick-linked belt of the foregoing aspect, wherein a material of the at least two reinforcing elements can be a metal material or other hard materials.

According to the quick-linked belt of the foregoing aspect, wherein a shape of the at least two reinforcing elements can be hollow cylindrical, hollow triangular columnar or hollow rectangular columnar.

According to the quick-linked belt of the foregoing aspect, wherein a material of the at least two connecting elements can be a metal material or other hard materials.

### BRIEF DESCRIPTION OF THE DRAWINGS

The present disclosure can be more fully understood by reading the following detailed description of the embodiment, with reference made to the accompanying drawings as follows:
Fig. 1 is an exploded view of a quick-linked belt according to one embodiment of the present disclosure.
Fig. 2 is an assembly schematic view of the quick-linked belt of Fig. 1 with a belt sprocket.
Fig. 3 is an exploded view of a quick-linked belt according to another embodiment of the present disclosure.
Fig. 4 is an assembly schematic view of the quick-linked belt of Fig. 2 with a belt sprocket.
Fig. 5 is an exploded view of a quick-linked belt according to still another embodiment of the present disclosure.
Fig. 6 is a partial exploded view of a quick-linked belt of Fig. 5.
Fig. 7 is an assembly schematic view of the quick-linked belt of Fig. 5 with a belt sprocket.
Fig. 8 is an exploded view of a quick-linked belt according to further another embodiment of the present disclosure.
Fig. 9 is an assembly schematic view of the quick-linked belt of Fig. 8 with a belt sprocket.

### DETAILED DESCRIPTION

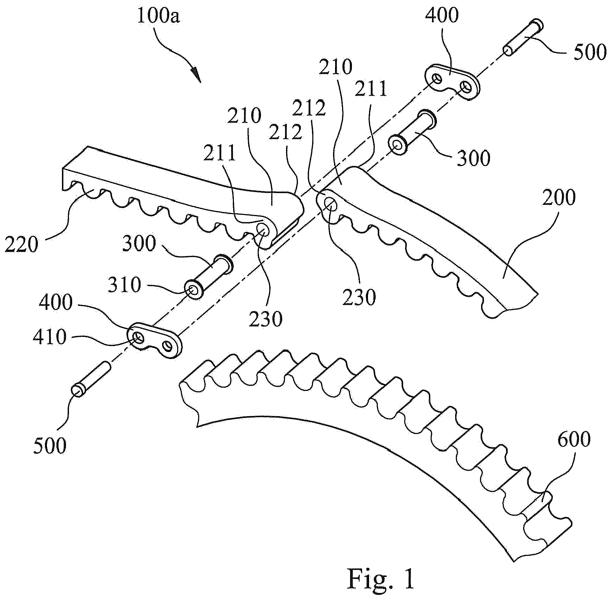

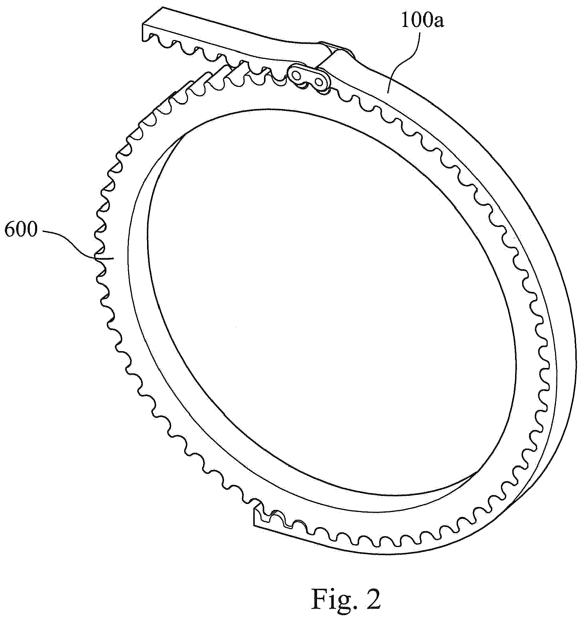

Please refer to Fig. 1 and Fig. 2. Fig. 1 is an exploded view of a quick-linked belt 100a according to one embodiment of the present disclosure, and Fig. 2 is an assembly schematic view of the quick-linked belt 100a of Fig. 1 with a belt sprocket 600. The quick-linked belt 100a is assembled with the belt sprocket 600 of a belt-driven vehicle, and the quick-linked belt 100a basically includes a belt element 200, at least two reinforcing elements 300, at least two fixing elements 500 and at least two connecting elements 400.

The belt element 200 includes a plurality of belt teeth 220 and two binding portions 210. Wherein the belt teeth 220 are integrally disposed on one side of the belt element 200, the two binding portions 210 are disposed on two ends of the belt element 200, respectively, and each of the two binding portions 210 includes at least one opening hole 230 for assembling the belt element 200.

Each of the two reinforcing elements 300 is disposed in the opening hole 230 of each of the two binding portions 210, and each of the two reinforcing elements 300 includes a through hole 310. By the arrangement of the reinforcing elements 300, the strength of the opening holes 230 of the two binding portions 210 can be increased. Therefore, it is favorable for preventing the abrasion of the binding portions 210 from wearing and tearing by the fixing elements 500 disposed therein during the power transmission process of the quick-linked belt 100a.

Each of the two fixing elements 500 is disposed in the through hole 310 of each of the two reinforcing elements 300, each of the two connecting elements 400 includes at least two passing holes 410 for passing through the two fixing elements 500, and the two binding portions 210 are connected to each other by the two connecting elements 400 so as to enclose the belt element 200 into a ring shape. Therefore, by the arrangement that the two binding portions 210 disposed respectively on the two ends of the belt element 200 are connected to each other by the connecting elements 400, the two binding portions 210 can be connected to each other without the modification processes such as cutting and being partial removed, so that the overall strength of the quick-linked belt 100a can be increased.

As shown in Fig. 1 and Fig. 2, in the quick-linked belt 100a, each of the two binding portions 210 includes a first side portion 211 and a second side portion 212. When the two binding portions 210 are connected to each other by the two connecting elements 400, the two binding portions 210 are opposite to each other, the first side portion 211 of one of the two binding portions 210 is disposed parallel to the second side portion 212 of the other of the two binding portions 210, and each of the two connecting elements 400 abuts simultaneously the first side portion 211 of one of the two binding portions 210 and the second side portion 212 of the other of the two binding portions 210. Therefore, the connecting elements 400 can be tightly attached and for positioning the two binding portions 210 so as to prevent the connection portion of the belt element 200 from being loosing during the power transmission process thereof and then affecting the power transmission efficiency.

As shown in Fig. 1 and Fig. 2, a length of each of the two connecting elements 400 can be equal to a double of a length of each of the belt teeth 220. Therefore, it is favorable for preventing the binding portions 210 from being too tight caused by the connection of the connecting elements 400 during the power transmission thereof and then further affecting the power transmission efficiency of the quick-linked belt 100a, so that the connection of the two binding portions 210 can be more stable. Furthermore, by the arrangement that the length of each of the connecting elements 400 is equal to the double of the length of each of the belt teeth 220, the quick-linked belt 100a can correspond to the shape of the belt sprocket 600 when the quick-linked belt 100a is assembled thereon. Therefore, the smoothness of the power transmission process of the quick-linked belt 100a can be enhanced.

A material of the two reinforcing elements 300 can be a metal material or other hard materials, so that the wearing and tearing of the two binding portions 210 of the belt element 200 during the power transmission process can be avoided. Furthermore, a shape of the two reinforcing elements 300 can be hollow cylindrical, hollow triangular columnar or hollow rectangular columnar, and the shape of the reinforcing elements 300 also can be adjusted according to actual needs, so that the demands for connecting stably can be achieved.

A material of the two connecting elements 400 can be a metal material or other hard materials. It is favorable for reducing the wearing and tearing of the connecting elements 400 caused by the abrasion between the connecting elements 400 and the fixing elements 500 which are generated from the collision, vibration or other external force of the power transmission process thereof. Therefore, the durability of the quick-linked belt 100a can be enhanced and the service life thereof can be extended.

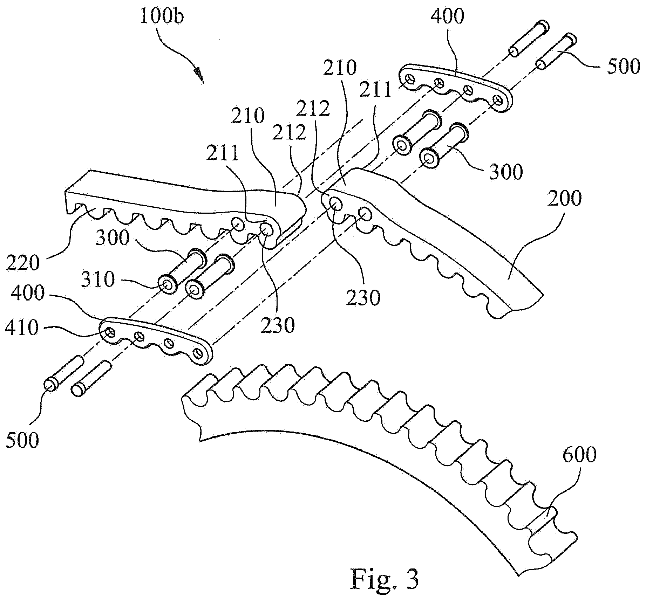

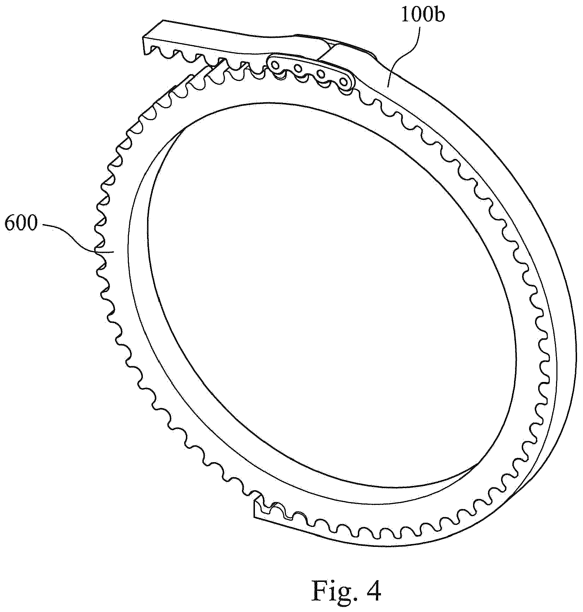

Please refer to Fig. 3 and Fig. 4. Fig. 3 is an exploded view of a quick-linked belt 100b according to another embodiment of the present disclosure, and Fig. 4 is an assembly schematic view of the quick-linked belt 100b of Fig. 2 with a belt sprocket 600. The elements and structure of the quick-linked belt 100b is similar with the quick-linked belt 100a of Fig. 1 and the detail of the same structure and elements will not be described again.

As shown in Fig. 3 and Fig. 4, each of two binding portions 210 of the quick-linked belt 100b includes two opening holes 230, each of two connecting elements 400 includes four passing holes 410 corresponding to the number of the opening holes 230, and a length of each of the connecting elements 400 is equal to a quadruple of a length of each of the belt teeth 220. Therefore, by the arrangement that the length of each of the connecting elements 400 is equal to the quadruple of the length of each of the belt teeth 220, the quick-linked belt 100b can correspond to the shape of the belt sprocket 600 when the quick-linked belt 100b is assembled thereon. Hence, the smoothness of the power transmission process of the quick-linked belt 100b can be enhanced. Furthermore, both of a number of the reinforcing elements 300 and a number of the fixing elements 500 also correspond to a number of the opening holes 230 of each of the two binding portions 210. Thus, the number of the reinforcing elements 300 is four, and the number of the fixing elements 500 is four. Therefore, due to the belt element 200 is connected by the two binding portions 210 with two opening hole 230, respectively, it is favorable for preventing the connection portion of the belt element 200 from being loosing caused by the vibration during the power transmission process thereof, so that the connection strength of the quick-linked belt 100b can be further enhanced.

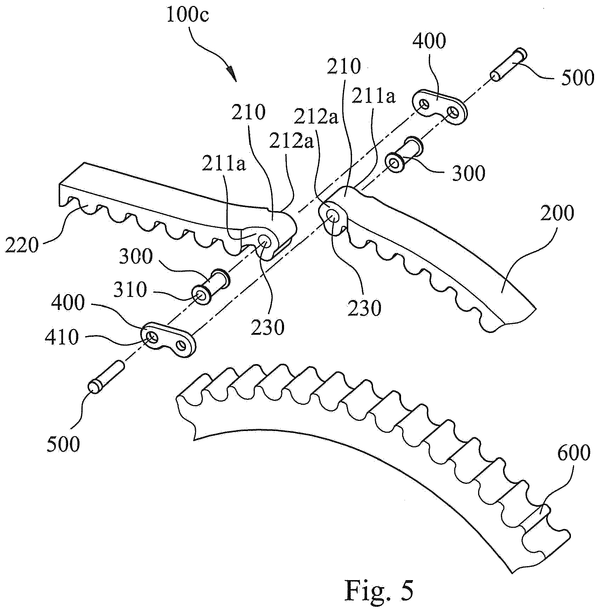

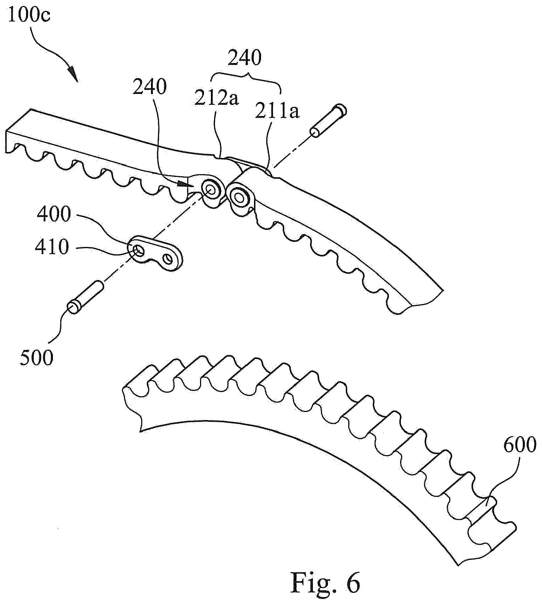

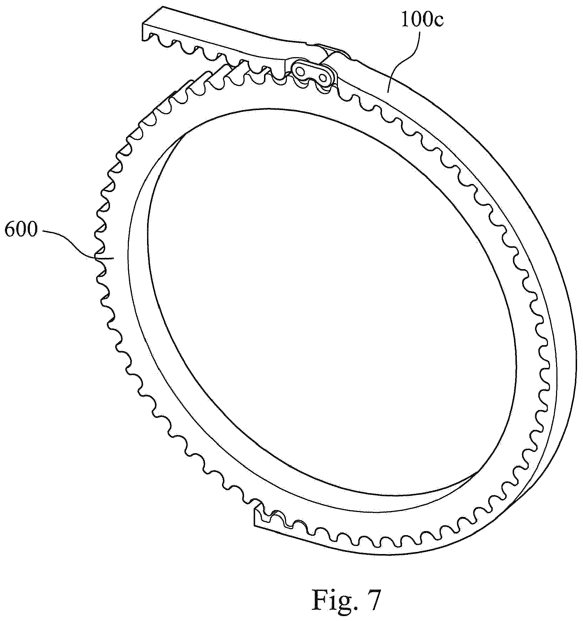

Please refer to Fig. 5, Fig. 6 and Fig. 7. Fig. 5 is an exploded view of a quick-linked belt 100c according to still another embodiment of the present disclosure, Fig. 6 is a partial exploded view of a quick-linked belt 100c of Fig. 5, and Fig. 7 is an assembly schematic view of the quick-linked belt 100c of Fig. 5 with a belt sprocket 600. The quick-linked belt 100c is assembled with the belt sprocket 600 of a belt-driven vehicle, and the quick-linked belt 100c basically includes a belt element 200, at least two reinforcing elements 300, at least two fixing elements 500 and at least two connecting elements 400.

The belt element 200 includes a plurality of belt teeth 220 and two binding portions 210. Wherein the belt teeth 220 are integrally disposed on one side of the belt element 200, and the two binding portions 210 are disposed on two ends of the belt element 200, respectively. Each of the two binding portions 210 includes at least one opening hole 230, wherein each of the two binding portions 210 includes a first concave portion 211a and a second concave portion 212a. When the two binding portions 210 are disposed opposite to each other, the first concave portion 211a of one of the two binding portions 210 is corresponding to the second concave portion 212a of the other of the two binding portions 210 so as to form one recessed cavity 240, and the second concave portion 212a of the one of the two binding portions 210 is correspondingly to the first concave portion 211a of the other of the two binding portions 210 so as to form the other recessed cavity 240. By the arrangement that the first concave portion 211a of the one of the two binding portions 210 is assembled with the second concave portion 212a of the other of the two binding portions 210 so as to form the recessed cavity 240, the two connecting elements 400 can be respectively accommodated in the two recessed cavities 240 without protruding. Hence, the overall structure of the belt element 200 can be neater. The belt element 200 with a neater structure is not only more beautiful but also favorable for preventing the connecting elements 400 from falling off or breaking caused by the vibration, collision or other external force during the driving of the belt-driven vehicle by the quick-linked belt 100c. Therefore, the rate of falling off as well as malfunction of the belt element 200 can be further reduced.

The two reinforcing elements 300 are respectively disposed in the two opening holes 230 of the two binding portions 210, and each of the two reinforcing elements 300 includes a through hole 310. By the arrangement of the reinforcing elements 300, the strength of the opening holes 230 of the two binding portions 210 can be increased. Therefore, it is favorable for preventing the abrasion of the binding portions 210 from wearing and tearing caused by the vibration or other external force during the power transmission process thereof.

The two fixing elements 500 are respectively disposed in the two through holes 310 of the two reinforcing elements 300. The two connecting elements 400 are respectively disposed in the two recessed cavities, wherein each of the two connecting elements 400 includes at least two passing holes 410 for passing through the two fixing elements 500, and the binding portions 210 are connected to each other by the two connecting elements 400 so as to enclose the belt element 200 into a ring shape. Therefore, by the arrangement that the two binding portions 210 disposed respectively on the two ends of the belt element 200 are connected to each other by the connecting elements 400, the two binding portions 210 of the belt element 200 can be connected to each other by partial cutting or being partial removed, so that the overall strength of the quick-linked belt 100c can be further increased.

As shown in Fig. 5, Fig. 6 and Fig. 7, in the quick-linked belt 100c, a length of each of the two connecting elements 400 can be equal to a double of a length of each of the belt teeth 220. Therefore, it is favorable for preventing the binding portions 210 from being too tight caused by the connection of the connecting elements 400 during the power transmission thereof and then further affecting the power transmission efficiency of the quick-linked belt 100c, so that the connection of the two binding portions 210 can be more stable. Furthermore, by the arrangement that the length of each of the connecting elements 400 is equal to the double of the length of each of the belt teeth 220, the quick-linked belt 100c can correspond to the shape of the belt sprocket 600 when the quick-linked belt 100c is assembled thereon. Therefore, the smoothness of the power transmission process of the quick-linked belt 100c can be enhanced.

A material of the two reinforcing elements 300 can be a metal material or other hard materials, so that the wearing and tearing of the two binding portions 210 of the belt element 200 during the power transmission process can be avoided. Furthermore, a shape of the two reinforcing elements 300 can be hollow cylindrical, hollow triangular columnar or hollow rectangular columnar, and the shape of the reinforcing elements 300 also can be adjusted according to actual needs, so that the demands for connecting stably can be achieved.

A material of the two connecting elements 400 can be a metal material or other hard materials. It is favorable for reducing the wearing and tearing of the connecting elements 400 caused by the abrasion between the connecting elements 400 and the fixing elements 500 which are generated from the collision, vibration or other external force of the power transmission process thereof. Therefore, the durability of the quick-linked belt 100c can be enhanced and the service life thereof can be extended.

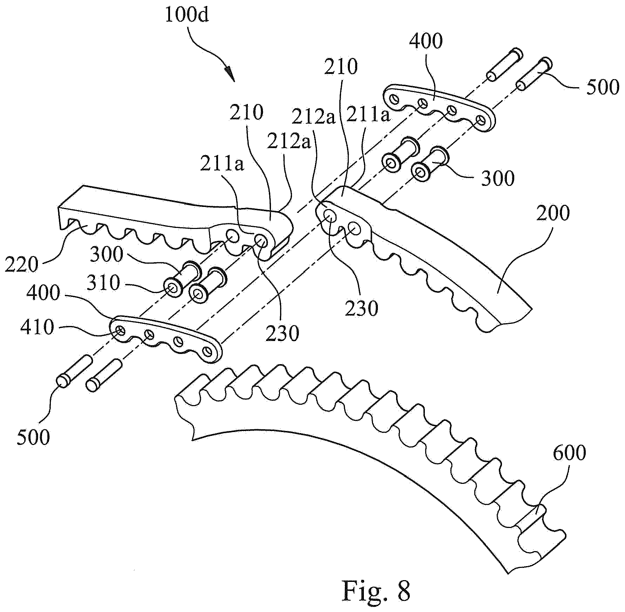

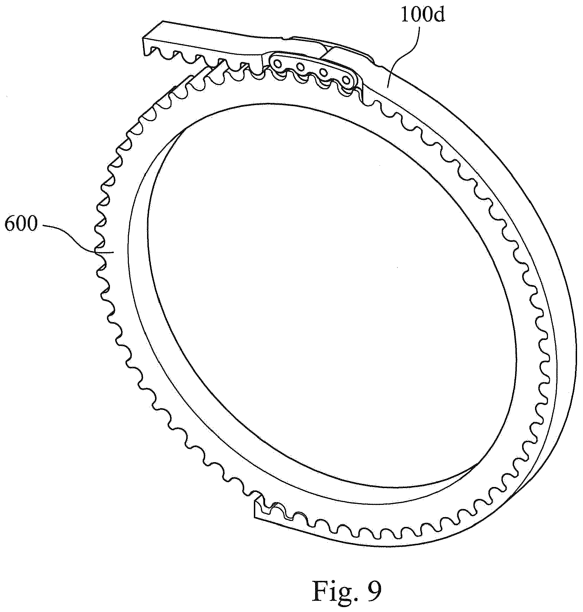

Please refer to Fig. 8 and Fig. 9. Fig. 8 is an exploded view of a quick-linked belt 100d according to further another embodiment of the present disclosure, and Fig. 9 is an assembly schematic view of the quick-linked belt 100d of Fig. 8 with a belt sprocket 600. The elements and structure of the quick-linked belt 100d is similar with the quick-linked belt 100c of Fig. 5 and the detail of the same structure and elements will not be described again.

As shown in Fig. 8 and Fig. 9, each of two binding portions 210 of the quick-linked belt 100d includes two opening holes 230, each of two connecting elements 400 includes four passing holes 410 corresponding to the number of the opening holes 230, and a length of each of the connecting elements 400 is equal to a quadruple of a length of each of the belt teeth 220. Both of a number of the reinforcing elements 300 and a number of the fixing elements 500 also correspond to a number of the opening holes 230 of each of the two binding portions 210. Thus, the number of the reinforcing elements 300 is four, and the number of the fixing elements 500 is four. Therefore, by the arrangement that the length of each of the connecting elements 400 is equal to the quadruple of the length of each of the belt teeth 220, the quick-linked belt 100d can correspond to the shape of the belt sprocket 600 when the quick-linked belt 100d is assembled thereon. Hence, the smoothness of the power transmission process of the quick-linked belt 100d can be enhanced. Furthermore, by the arrangement that the belt element 200 is connected by the two binding portions 210 with two opening hole 230, respectively, it is favorable for preventing the connection portion of the belt element 200 from being loosing caused by the vibration during the power transmission process thereof, so that the connection strength of the quick-linked belt 100d can be further enhanced. By the arrangement that the first concave portion 211a of the one of the binding portions 210 is assembled with the second concave portion 212a of the other of the binding portions 210 so as to form the recessed cavity 240, the connecting elements 400 can be respectively accommodated in the two recessed cavities 240 without protruding. Hence, the overall structure of the belt element 200 can be neater, and the connecting strength of the quick-linked belt 100d can be further enhanced.

According to the aforementioned embodiments, the present disclosure has the advantages described bellowing. First, by the method that the belt element is connected in to a ring shape by the reinforcing elements, the fixing elements and the connecting elements, the quick-linked belt of the present disclosure can be assembled quickly, and the assembling process of the quick-linked belt on the belt sprocket can be simplified. Therefore, the use of the quick-linked belt can be more convenient. Second, by the arrangement that the binding portions disposed on the two ends of the belt element are connected to each other by the two connecting elements, the belt element can be connected without excessive cutting and removal process or other modification process, or only with partial cutting and removing. Therefore, the overall strength of the belt element can be increased, and the manufacturing process thereof is more simplified, so that the manufacturing cost thereof can be further reduced. Third, by the arrangement of the reinforcing elements, the strength of the binding portions of the belt element can be further increased, and the wearing and tearing of the belt element caused by the fixing elements disposed in the binding portions can be avoided. Therefore, the durability of the quick-linked belt can be enhanced and the service life thereof can be extended. Fourth, by the arrangement of the recessed cavity, the connecting elements can be further accommodated in the recessed cavity. Therefore, the belt element with a neater structure is not only more beautiful but also favorable for preventing the connecting elements from falling off or breaking caused by the vibration, collision or other external force during the driving of the belt-driven vehicle by the quick-linked belt. Therefore, the rate of falling off as well as malfunction of the belt element can be further reduced.

Although the present disclosure has been described in considerable detail with reference to certain embodiments thereof, other embodiments are possible. Therefore, the spirit and scope of the appended claims should not be limited to the description of the embodiments contained herein. It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A quick-linked belt, which is assembled with a belt sprocket of a belt-driven vehicle, comprising:
a belt element comprising a plurality of belt teeth and two binding portions, wherein the belt teeth are integrally disposed on one side of the belt element, the two binding portions are disposed on two ends of the belt element, respectively, and each of the two binding portions comprises at least one opening hole;
at least two reinforcing elements, wherein each of the at least two reinforcing elements is disposed in the at least one opening hole of each of the two binding portions, and each of the at least two reinforcing elements comprises a through hole;
at least two fixing elements, wherein each of the at least two fixing elements is disposed in the through hole of each of the at least two reinforcing elements; and
at least two connecting elements, wherein each of the at least two connecting elements comprises at least two passing holes for passing through the at least two fixing elements, and the two binding portions are connected to each other by the at least two connecting elements so as to enclose the belt element into a ring shape.

2. The quick-linked belt of claim 1, wherein each of the two binding portions comprises a first side portion and a second side portion, and when the two binding portions are connected to each other by the at least two connecting elements, the two binding portions are opposite to each other, the first side portion of one of the two binding portions is disposed parallel to the second side portion of the other of the two binding portions, and each of the at least two connecting elements abuts simultaneously the first side portion of one of the two binding portions and the second side portion of the other of the two binding portions.

3. The quick-linked belt of claim 1, wherein a length of each of the at least two connecting elements is larger than or equal to a double of a length of each of the belt teeth.

4. The quick-linked belt of claim 1, wherein a material of the at least two reinforcing elements is a metal material.

5. The quick-linked belt of claim 1, wherein a shape of the at least two reinforcing elements is hollow cylindrical, hollow triangular columnar or hollow rectangular columnar.

6. The quick-linked belt of claim 1, wherein a material of the at least two connecting elements is a metal material.

7. A quick-linked belt, which is assembled with a belt sprocket of a belt-driven vehicle, comprising:
a belt element, comprising:
a plurality of belt teeth integrally disposed on one side of the belt element; and
two binding portions disposed on two ends of the belt element, respectively, wherein each of the two binding portions comprises at least one opening hole, a first concave portion and a second concave portion, and when the two binding portions are disposed opposite to each other, the first concave portion of one of the two binding portions is corresponding to the second concave portion of the other of the two binding portions so as to form one recessed cavity, and the second concave portion of the one of the two binding portions is corresponding to the first concave portion of the other of the two binding portions so as to form the other recessed cavity;
at least two reinforcing elements, wherein each of the at least two reinforcing elements is disposed in the opening hole of each of the two binding portions, and each of the at least two reinforcing elements comprises a through hole;
at least two fixing elements, wherein each of the at least two fixing elements is disposed in the through hole of each of the at least two reinforcing elements; and
at least two connecting elements respectively disposed in the two recessed cavities, wherein each of the at least two connecting elements comprises at least two passing holes for passing through the at least two fixing elements, and the two binding portions are connected to each other by the at least two connecting elements so as to enclose the belt element into a ring shape.

8. The quick-linked belt of claim 7, wherein length of each of the at least two connecting elements is larger than or equal to a double of a length of each of the belt teeth.

9. The quick-linked belt of claim 7, wherein a material of the at least two reinforcing elements is a metal material.

10. The quick-linked belt of claim 7, wherein a shape of the at least two reinforcing elements is hollow cylindrical, hollow triangular columnar or hollow rectangular columnar.

11. The quick-linked belt of claim 7, wherein a material of the at least two connecting elements is a metal material.
